**Europäisches Patentamt**

**European Patent Office**

**Office européen des brevets**

(19)

(11) Numéro de publication : **0 306 369 B1**

(12)

# FASCICULE DE BREVET EUROPEEN

(45) Date de publication du fascicule du brevet :
**08.04.92 Bulletin 92/15**

(51) Int. Cl.⁵ : **F16F 13/00**

(21) Numéro de dépôt : **88402010.8**

(22) Date de dépôt : **02.08.88**

(54) **Perfectionnements aux manchons de support antivibratoires hydrauliques.**

(30) Priorité : **04.08.87 FR 8711057**

(43) Date de publication de la demande :
**08.03.89 Bulletin 89/10**

(45) Mention de la délivrance du brevet :
**08.04.92 Bulletin 92/15**

(84) Etats contractants désignés :
**DE ES GB IT**

(56) Documents cités :
**EP-A- 0 172 700**
**PATENT ABSTRACTS OF JAPAN, vol. 11, no.**
**336 (M-638)[2783], 4 novembre 1987, page 84**
**M 638; & JP-A-62 118 131 (BRIDGESTONE**
**CORP.) 29-05-1987**

(56) Documents cités :
**PATENT ABSTRACTS OF JAPAN, vol. 11, no.**
**336 (M-638)[2783], 4 2ovembre 1987, page 84 M**
**638; & JP-A-62 118 132 (BRIDGESTONE**
**CORP.) 29-05-1987**
**PATENT ABSTRACTS OF JAPAN, vol. 9, no.**
**268 (M-424)[1991], 25 octobre 1985, page 90 M**
**424; & JP-A-60 113 836 (TOYOTA JIDOSHA**
**K.K.) 20-06-1985**

(73) Titulaire : **HUTCHINSON**
**2 rue Balzac**
**F-75008 Paris (FR)**

(72) Inventeur : **Bouhier, Bernard**
**2, rue G. Philipe**
**F-18100 Vierzon (FR)**

(74) Mandataire : **Behaghel, Pierre et al**
**CABINET PLASSERAUD 84 rue d'Amsterdam**
**F-75009 Paris (FR)**

## Description

L'invention est relative aux manchons de support antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère adhéré sur celles-ci et conformé de façon à former avec ces dernières au moins deux chambres étanches diamétralement opposées selon une direction Y et communiquant entre elles par un canal étroit, l'ensemble desdites chambres et dudit canal étant rempli d'un liquide amortisseur.

De tels manchons sont destinés à être montés aux fins de support et d'amortissement entre deux pièces rigides solidarisables respectivement avec les deux armatures et susceptibles de subir l'une par rapport à l'autre des oscillations orientées selon la direction diamétrale Y, l'ensemble étant agencé de façon telle que, pour certaines au moins de ces oscillations, le liquide soit refoulé alternativement de l'une des chambres vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons à débattement diamétral du genre en question sont par exemple destinés à être interposés entre, d'une part, un châssis de véhicule et, d'autre part, le moteur à combustion interne ou le train avant ou arrière de ce véhicule.

Pour assurer les supports et amortissements mentionnés ci-dessus, on connaît un autre type de dispositifs hydrauliques, à débattement axial et non pas diamétral, présentant une construction de révolution autour d'un axe généralement vertical, la direction selon laquelle se manifestent les oscillations à amortir étant celle de cet axe.

Ces supports comportent encore deux chambres déformables étanches communiquant entre elles par un canal étroit, l'une de ces deux chambres, généralement délimitée extérieurement par une paroi tronconique épaisse, étant dite "chambre de travail" alors que l'autre, essentiellement délimitée par une feuille flexible, est dite "chambre de compensation".

Il a été proposé d'équiper ces autres supports de moyens de "découplage haute fréquence", c'est-à-dire permettant de filtrer les vibrations de relativement faible amplitude (généralement inférieure à 0,5 mm) et de relativement haute fréquence (généralement supérieure à 15 Hz) telles que celles dues au fonctionnement d'un moteur à combustion interne de véhicule.

Ces moyens comprennent un "clapet" mobile ou déformable délimitant une portion de la chambre de travail, cette portion pouvant se situer au niveau de la paroi extérieure de ladite chambre ou au niveau d'une cloison centrale séparant les deux chambres.

On a cherché à appliquer de tels moyens de découplage aux manchons à débattement diamétral tels que définis ci-dessus.

C'est ainsi qu'il a été proposé dans la demande de brevet EP-A-0 172 700 de constituer une portion de la paroi extérieure de l'une des deux chambres d'un tel manchon par une membrane déformable encagée entre deux grilles rigides aux fins de limitation de ses débattements.

Une telle solution présente l'inconvénient qu'en cas de rupture ou fuite de la membrane, le liquide contenu dans le manchon s'échappe à l'extérieur, ce qui rend ce manchon inopérant.

Du fait de la construction particulière des manchons considérés, dont la portion centrale est occupée par l'armature tubulaire interne, il n'était pas considéré comme envisageable jusqu'à ce jour de faire porter à la fois le clapet et le canal étroit par l'armature interne.

C'est ainsi que l'on trouve sur l'armature interne :
– le clapet, mais pas le canal étroit dans le document JP-A-62 118 131, présentant les caractéristiques de la première partie de la revendication 1,
– le canal étroit, mais pas le clapet dans le document JP-A-62 118 132, présentant les caractéristiques de la première partie de la revendication 2.

L'invention a pour objet de rendre possible le montage simultané du clapet et du canal étroit sur l'armature interne.

A cet effet,
– selon un premier mode de réalisation de l'invention, les manchons du genre en question comprennent deux armatures rigides tubulaires s'entourant l'une l'autre et réunies entre elles par un corps en élastomère adhéré sur elles et conformé de façon à former avec elles au moins deux chambres étanches diamétralement opposées et communiquant entre elles par un canal étroit, l'ensemble desdites chambres et dudit canal étant rempli d'un liquide amortisseur, une bague rigide étant rapportée de façon étanche sur la face latérale extérieure de la portion médiane de l'armature interne de façon à être immergée dans l'une des deux chambres, la bague étant agencée en double siège pour un clapet mobile ou déformable monté sur l'embouchure de cette bague, le clapet présentant deux portées opposées mises respectivement en contact direct avec les volumes de liquide contenus respectivement dans les deux chambres, les deux sièges limitant les amplitudes de débattement de ce clapet et un passage de grande section étant prévu le long de la portion médiane de l'armature interne pour faire communiquer librement avec l'intérieur de la bague la chambre dans laquelle n'est pas immergée cette bague et ils sont caractérisés en ce que le canal étroit est évide radialement dans la bague rigide,

– et selon un autre mode de réalisation de l'invention, les manchons du genre en question comprennent deux armatures rigides tubulaires s'entourant l'une l'autre et réunies entre elles par un corps en élastomère adhéré sur elles et conformé de façon à former avec elles au moins deux chambres étanches diamétralement opposées et communiquant entre elles par un canal étroit s'étendant selon un arc de cercle, l'ensemble desdites chambres et dudit canal étant rempli d'un liquide amortisseur, un passage solidaire de l'une des armatures et en forme de tuile cylindrique, dont l'axe coïncide avec celui de l'armature interne, le passage étant agencé en double siège rigide pour un clapet en forme de tuile cylindrique monté de façon à pouvoir coulisser angulairement dans ce passage et à exposer respectivement ses deux tranches latérales aux volumes de liquide contenus dans les deux chambres, les deux sièges limitant les amplitudes de débattement de ce clapet et ils sont caractérisés en ce que l'armature dont est solidaire le passage est l'armature interne, en ce que le passage en forme de tuile est évidé dans la portion médiane de cette armature interne et en ce que le canal étroit s'etendant selon un arc de cercle est délimité essentiellement par une rainure réservée sous la forme d'un arc de cercle entre le clapet en forme de tuile et son logement défini par le passage en forme de tuile cylindrique.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

Les figures 1 et 2, de ces dessins, montrent un premier manchon de support antivibratoire hydraulique établi selon l'invention, respectivement en coupe transversale selon I-I, figure 2 et en coupe axiale selon II-II, figure 1.

Les figures 3 et 4 montrent un second manchon également conforme à l'invention, respectivement en coupe transversale selon III-III, figure 4 et en coupe axiale selon IV-IV, figure 3.

La figure 5 montre une portion de la figure 3 avec une position différente du clapet correspondant.

D'une façon connue en soi, le manchon de support comprend dans chaque cas :

– une armature métallique interne tubulaire de révolution 1 dont l'axe X est généralement horizontal,

– une armature métallique externe tubulaire de révolution 2 coaxiale à l'armature 1 au moins pour l'état monté et chargé du manchon et entourant cette armature 1,

– et un corps en élastomère 3 reliant l'une à l'autre les deux armatures 1 et 2 en ménageant entre celles-ci deux chambres étanches A,B diamétralement opposées selon une direction Y généralement verticale.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Les deux chambres A et B communiquent entre elles par un canal étroit E sur lequel on reviendra plus loin.

Ces deux chambres et le canal étroit sont remplis d'un liquide L.

Le fonctionnement d'un tel manchon de support est le suivant.

Au repos, le manchon se trouve dans son état illustré sur les dessins.

Si, à partir de cette situation, on applique sur l'armature externe 2, par rapport à l'armature interne 1, une sollicitation selon la direction Y dans la sens de la flèche F, la chambre A se rétrécit par écrasement alors qu'au contraire la chambre B se dilate : le liquide L initialement contenu dans la chambre A est alors chassé vers la chambre B à travers le canal étroit E.

Cet effet est inversé dès que la sollicitation en sens inverse de la précédente est exercée sur l'armature 2.

L'alternance de ces sollicitations est généralement renouvelée à une certaine fréquence et, pour une valeur F de cette fréquence qui est prédéterminée et liée aux dimensions du canal étroit E, et en particulier au rapport entre sa section droite et sa longueur, la masse de liquide circulant dans ce canal est mise en résonance et le support exerce alors sur la transmission des oscillations de l'une des armatures à l'autre un excellent amortissement.

Le perfectionnement apporté par la présente invention aux manchons du genre ci-dessus permet de les "découpler" vis-à-vis de certaines hautes fréquences, c'est-à-dire de filtrer directement certaines vibrations de fréquence relativement élevée et d'amplitude relativement faible sans faire intervenir aucune circulation du liquide L dans le canal étroit E.

Dans chaque cas on fait appel à cet effet à un clapet vibrant monté de façon telle :

– que ses débattements soient commandés par application de pressions sur respectivement deux de ses plages opposées,

– que ces plages soient en contact direct avec respectivement les volumes de liquide contenus dans les deux chambres A et B,

– et que l'amplitude desdits débattements soit limitée à une faible valeur.

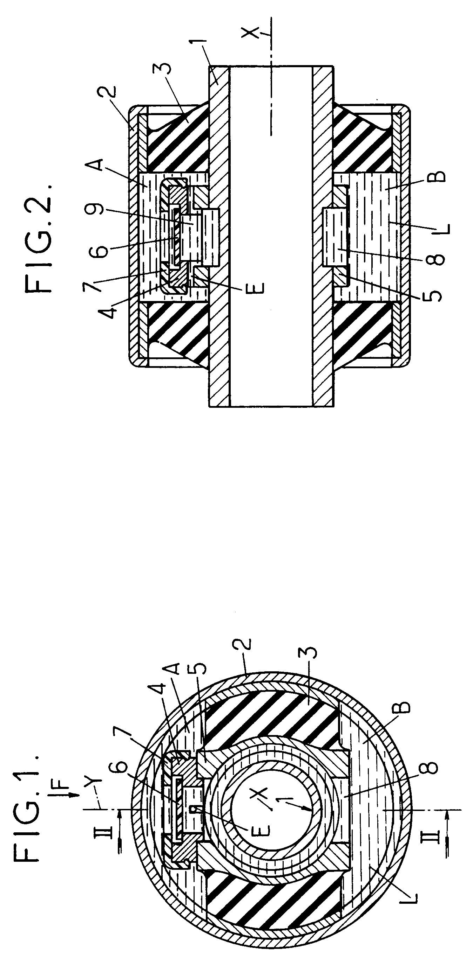

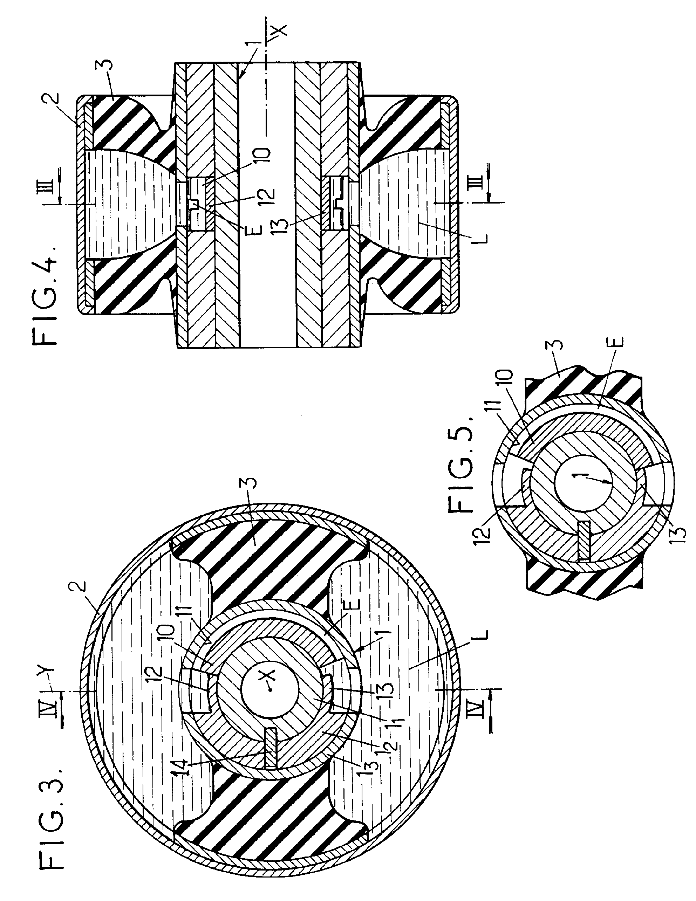

Dans les deux modes de réalisation de manchon et clapet qui ont été illustrés, le premier sur les figures 1 et 2 et le second sur les figures 3 à 5, le siège du clapet est porté par la portion médiane de l'armature interne 1 et il en est de même du canal étroit E.

Mais les constructions proposées diffèrent dans les deux cas.

Dans le premier cas (figures 1 et 2), une bague cylindrique de révolution 4 est rapportée latéralement sur la face extérieure du tube interne 1, ou plus précisément sur un collier 5 entourant la portion médiane dudit tube, et ce de façon telle que l'axe de cette bague 4 coupe l'axe X et soit orienté parallèlement à la direction Y, ladite bague 4 étant immergée dans la chambre A.

L'extrémité axiale, de la bague 4, qui est la plus éloignée de l'axe X, forme un double siège pour un clapet 6 lui-même constitué par un disque circulaire rigide.

En d'autres termes, le clapet 6 peut se déplacer librement selon la direction Y entre deux butées annulaires rigides comprises respectivement par la bague 4 elle-même et par un capuchon 7 coiffant cette bague et fixé sur celle-ci par clipsage.

Les dimensions de la bague 4 et du capuchon 7 sont prévues de façon telle que l'amplitude des débattements du clapet 6 soit limitée à une faible valeur, par exemple de l'ordre de 0,5 mm.

La face, du clapet 6, la plus éloignée de l'axe X, est directement en contact avec le liquide contenu dans la chambre A.

Pour assurer une libre communication du liquide entre la chambre B et l'autre face du clapet 6, on prévoit un canal annulaire 8 de grande section le long de la portion médiane du tube 1, à l'intérieur du collier 5, canal communiquant avec la cavité cylindrique 9 intérieure à la bague 4.

Le diamètre de cette cavité 9 est lui-même prévu suffisamment grand pour qu'aucun phénomène d'étranglement ne soit imposé au liquide entre le canal 8 et le clapet 6.

Le canal étroit E, quant à lui, est ici constitué par au moins un passage évidé radialement dans la bague 4 et faisant communiquer la cavité 9 avec la chambre A.

Le fonctionnement en "découplage haute fréquence" d'un tel manchon est le suivant.

Lorsqu'une vibration de faible amplitude (savoir en général inférieure à 0,5 mm) et de fréquence relativement élevée (savoir supérieure à 15 Hz et par exemple de l'ordre de 50, 100 ou 150 Hz) est appliquée à l'une des deux armatures 1 et 2, elle entraîne en vibration le clapet 6 et ce phénomène suffit pour assurer un effet de filtrage empêchant le transfert des vibrations de l'armature considérée à l'autre armature.

Si l'amplitude des vibrations considérées dépasse la valeur de seuil imposée par les butées de fin de course du clapet, le liquide est forcé de circuler dans le canal étroit E et l'on retrouve l'autre mode de fonctionnement amortisseur du manchon, plus spécialement réservé aux oscillations de basse fréquence, mode faisant intervenir la résonance du liquide en circulation dans le canal étroit.

Dans le second mode de réalisation qui a été illustré sur les figures 3 à 5, le clapet se présente sous la forme d'une tuile cylindrique 10 s'étendant selon un arc de cercle et disposée jointivement dans un logement complémentaire 11 évidé à l'intérieur de l'armature interne 1 concentriquement à l'axe X, de façon à pouvoir coulisser angulairement dans ce logement.

L'étendue angulaire de cette tuile est comprise entre 90 et 180°, étant de préférence de l'ordre de 150°.

Deux butées de fin de course 12 et 13 sont prévues sur l'armature 1 pour limiter l'amplitude des débattements angulaires de la tuile 10.

Les deux extrémités angulaires du logement 11 débouchent respectivement dans les deux chambres A et B de façon que les deux tranches latérales de la tuile 10 soient en contact direct avec respectivement les deux volumes de liquide L contenus respectivement dans ces deux chambres A et B.

Le canal étroit E est ici délimité par une rainure en arc de cercle évidée dans le dos de la tuile 10 et par la paroi en regard du logement 11.

Dans le mode de réalisation illustré, l'armature tubulaire interne 1 est composée de trois tubes concentriques $1_1$, $1_2$, $1_3$ emmanchés jointivement les uns dans les autres. Les deux tubes intérieurs $1_1$ et $1_2$ sont solidarisés angulairement entre eux par une clavette radiale 14 et la solidarisation angulaire des deux tubes extérieurs $1_2$ et $1_3$, tous les deux ajourés pour assurer les communications désirées et former le logement 11, est assurée de toute manière désirable, notamment à l'aide d'au moins un point de soudure. Le tube intérieur $1_1$ sert de noyau de guidage pour la face interne de la tuile 10 alors que le tube extérieur $1_3$ sert de cage extérieure guidant la face extérieure de ladite tuile, les butées de fin de course 12 et 13 faisant corps avec le tube intermédiaire $1_2$.

Le fonctionnement de ce manchon en "découplage haute fréquence" est analogue à celui précédemment décrit à la seule différence près que les débattements du clapet précédent 6 sont ici remplacés par les débattements angulaires de la tuile 10 autour de l'axe X, entre les deux fins de course définies par les butées 12 et 13, ladite tuile jouant ici un rôle de "clapet" : on voit respectivement sur les figures 3 et 5 les deux positions angulaires extrêmes occupées par ladite tuile 10 lors desdits débattements.

En suite de quoi, et quel que soit le mode de réalisation adopté, on dispose de manchons de support antivibratoires dont la constitution et le fonctionnement résultent suffisamment de ce qui précède.

Ces manchons présentent de nombreux avantages par rapport à ceux antérieurement connus, en particulier celui d'assurer un "découplage haute fréquence" efficace sans qu'il existe un risque quelconque de fuite de liquide vers l'extérieur du manchon au niveau même du clapet ou de son siège.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes couvertes par le libellé des revendications.

## Revendications

1. Manchon de support antivibratoire hydraulique comprenant deux armatures rigides tubulaires (1,2) s'entourant l'une l'autre et réunies entre elles par un corps en élastomère (3) adhéré sur elles et conformé de façon à former avec elles au moins deux chambres étanches (A,B) diamétralement opposées et communiquant entre elles par un canal étroit (E), l'ensemble desdites chambres et dudit canal étant rempli d'un liquide amortisseur, une bague rigide (4) étant rapportée de façon étanche sur la face latérale extérieure de la portion médiane de l'armature interne (1) de façon à être immergée dans l'une (A) des deux chambres, la bague (4) étant agencée en double siège pour un clapet (6) mobile ou déformable monté sur l'embouchure de cette bague (4), le clapet (6) présentant deux portées opposées mises respectivement en contact direct avec les volumes de liquide contenus respectivement dans les deux chambres (A,B), les deux sièges limitant les amplitudes de débattement de ce clapet (6) et un passage de grande section (8) étant prévu le long de la portion médiane de l'armature interne pour faire communiquer librement avec l'intérieur (9) de la bague la chambre (B) dans laquelle n'est pas immergée cette bague, caractérisé en ce que le canal étroit (E) est évidé radialement dans la bague rigide (4).

2. Manchon de support antivibratoire hydraulique comprenant deux armatures rigides tubulaires (1,2) s'entourant l'une l'autre et réunies entre elles par un corps en élastomère (3) adhéré sur elles et conformé de façon à former avec elles au moins deux chambres étanches (A,B) diamétralement opposées et communiquant entre elles par un canal étroit (E) s'étendant selon un arc de cercle, l'ensemble desdites chambres et dudit canal étant rempli d'un liquide amortisseur, un passage (11) solidaire de l'une des armatures et en forme de tuile cylindrique, dont l'axe coïncide avec celui (X) de l'armature interne (1), le passage (11) étant agencé en double siège rigide pour un clapet (10) en forme de tuile cylindrique monté de façon à pouvoir coulisser angulairement dans ce passage (11) et à exposer respectivement ses deux tranches latérales aux volumes de liquide contenus dans les deux chambres (A,B), les deux sièges limitant les amplitudes de débattement de ce clapet (10), caractérisé en ce que l'armature dont est solidaire le passage (11) est l'armature interne (1), en ce que le passage en forme de tuile est évidé dans la portion médiane de cette armature interne (1) et en ce que le canal étroit (E) s'étendant selon un arc de cercle est délimité essentiellement par une rainure réservée sous la forme d'un arc de cercle entre le clapet (10) en forme de tuile et son logement défini par le passage (11) en forme de tuile cylindrique.

## Patentansprüche

1. Hydraulisch gedämpfte Lagerbuchse, die aus folgenden Teilen besteht: Zwei starren rohrförmigen Armaturen (1, 2), von denen die eine die andere umgibt und die untereinander durch einen Block (3) aus elastomerem Material verbunden sind, der an diesen angebracht und so ausgebildet ist, daß er mit den Armaturen wenigstens zwei dichte Kammern (A, B) bildet, die sich diametral gegenüberliegen und untereinander über einen engen Kanal (E) verbunden sind, wobei die beiden Kammern und der Kanal mit einer Dämpfungsflüssigkeit gefüllt sind, einem starren Ring (4), der dicht auf die äußere Seitenfläche des mittleren Abschnittes der inneren Armatur (1) aufgesetzt ist, so daß er in eine der Kammern (A) eintaucht, wobei der Ring (4) mit einem doppelten Sitz für ein Ventil (6) versehen ist, das beweglich oder deformierbar an der Auslaböffnung des Ringes (4) angebracht ist, das Ventil (6) zwei sich gegenüberliegende Flächenbereiche hat, die jeweils in direkten Kontakt mit den Flüssigkeitsvolumina in den entsprechenden Kammern (A, B) gebracht werden, die beiden Sitze die Schwingungsamplituden des Ventils (6) begrenzen und eine Durchgangsöffnung (8) mit großem Querschnitt, längs des mittleren Abschnittes der inneren Armatur vorgesehen ist und eine freie Verbindung zwischen dem Innenraum (9) des Ringes und der Kammer (B), in die der Ring nicht eintaucht, sicherstellt, dadurch gekennzeichnet, daß der enge Kanal (E) radial in dem starren Ring (4) ausgenommen ist.

2. Hydraulisch gedämpfte Lagerbuchse, bestehend aus zwei starren rohrförmigen Armaturen (1, 2), von denen die eine die andere umgibt und die untereinander durch einen Block (3) aus elastomerem Material verbunden sind, der an diesen befestigt und so ausgebildet ist, daß er mit den Armaturen wenigstens zwei dichte Kammern (A, B) bildet, die sich diametral gegenüberliegen und miteinander über einen engen Kanal (E) verbunden sind, der sich längs eines Kreisbogens erstreckt, wobei die beiden Kammern und der Kanal mit einer Dämpfungsflüssigkeit gefüllt sind, wobei ein Durchgang (11), der aus einem Stück mit einer der Armaturen besteht und die Form eines Dachziegels hat, der entsprechend dem Mantelabschnitt eines Zylinders gewölbt ist, dessen Achse mit der Achse (X) der innerer Armatur (1) zusammenfällt, vorgesehen ist, wobei der Durchgang (11) mit einem doppelten starren Sitz für ein Ventil (10) versehen ist, das die Form eines zylindermantelartig gewölbten Dachziegels hat und so befestigt ist, daß es eine Winkelverschiebung in dem Durchgang (11) ausführen kann und die entsprechenden seitlichen Endflächen des Sitzes den entsprechenden Flüssigkeitsvolumina aussetzt werden, die in den beider: Kammern (A, B) vorhanden sind und die beiden Ventilsitze die Schwingungsamplituden des Ventils (10) begrenzen, dadurch gekennzeichnet, daß die Armatur, in der der Durchgang (11) angebracht ist, die innere Armatur ist, daß der dachziegelartige Durchgang im mittleren Abschnitt der inneren Armatur (1) ausgenommer ist und daß der enge Kanal (E), dir sich längs eines Kreisbogens erstreckt, im wesentlichen durch eine Rinne begrenzt wird, die sich die Form eines Kreisbogens zwischen dem dachziegelartigen Ventil (10) und seiner Wohnung, die durch der Durchgang (11) definiert ist, aufweist.

nel (E) extending along an arc of a circle, the whole of said chambers and said channel being filled with a damping liquid, a passage (11) integral with one of the frames and in the form of a cylindrical tile, whose axis coincides with that (X) of the internal frame (1), the passage (11) being adapted as a double valve seat for a valve (10) in the form of a cylindrical tile mounted so as to be able to slide angularly in this passage and to expose its two side edges respectively to the liquid volumes contained in the two chambers (A,B), the two seats limiting the amplitudes of the movement of this valve (10), characterized in that the frame with which the passage (11) is integral is the internal frame (1), in that the tile shaped passage is hollowed in the median portion of said internal frame (1) and in that the narrow channel (E) extending along an arc of a circle is defined essentially by a groove extending along an arc of a circle and formed between the tile shaped valve (10) and its housing (11) defined by the cylindrical tile shaped passage (11).

## Claims

1. Hydraulic antivibratory support sleeve comprising two rigid tubular frames (1,2) one surrounding the other and joined together by an elastomer body (3) adhered thereto and adapted so as to form therewith at least two diametrically opposite sealed chambers (A,B) communicating together through a narrow channel (E), the whole of said chambers and said channel being filled with a damping liquid, a rigid ring (4) being sealingly fitted to the outer lateral face of the median portion of the internal frame (1) so as to be immersed in one (A) of the two chambers, the ring (4) being adapted as a double valve seat for a mobile or deformable valve (6) mounted over the opening of this ring (4), which valve has two opposite surfaces placed respectively in direct contact with the liquid volumes contained respectively in both chambers (A,B) the two seats limiting the amplitude of the deflection movements of this valve (6) and a large section passage (8) being provided along the median portion of the internal frame so as to cause the chamber (B) in which the ring is not immersed to communicate freely with the inside (9) of this ring, characterized in that the narrow channel (E) is formed radially in the ring (4).

2. Hydraulic antivibratory support sleeve comprising two rigid tubular frames (1,2) one surrounding the other and joined together by an elastomer body (3) adhered thereto and adapted so as to form therewith at least two diametrically opposite sealed chambers (A,B) communicating together through a narrow chan-

# FIG.2.

# FIG.1.

7

FIG.4.

FIG.3.

FIG.5.